# EUROPÄISCHE PATENTSCHRIFT

(11) **EP 3 094 466 B1**
(45) Veröffentlichungstag und Bekanntmachung des Hinweises auf die Patenterteilung: **14.07.2021**
(21) Anmeldenummer: 15700314.6
(22) Anmeldetag: 15.01.2015
(51) Int. Cl.: B29C 48/34, B29C 48/90

(54) **VERFAHREN UND VORRICHTUNG ZUM STÜTZEN EINES KUNSTSTOFFPROFILS**
METHOD AND DEVICE FOR SUPPORTING A PLASTICS PROFILE
PROCÉDÉ ET DISPOSITIF POUR SUPPORTER UN PROFILÉ EN MATIÈRE PLASTIQUE

(30) Priorität: 15.01.2014 DE 102014200578
(43) Veröffentlichungstag der Anmeldung: 23.11.2016
(73) Patentinhaber: battenfeld-cincinnati Germany GmbH, 32547 Bad Oeynhausen (DE)
(72) Erfinder: DOHMANN, Heinrich, 37671 Höxter (DE); DRÖGE, Jörg, 47647 Kerken (DE)
(86) Internationale Anmeldenummer: PCT/EP2015/050618
(87) Internationale Veröffentlichungsnummer: WO 2015/107093

(56) Entgegenhaltungen:
- EP-A1- 2 546 045
- EP-A2- 1 967 350
- CN-A- 101 947 851
- JP-A- H04 259 527
- JP-A- H11 263 419
- US-A- 4 388 061
- US-A1- 2013 146 426
- None

## Beschreibung

Die Erfindung betrifft ein Extrusionslinie mit einer Vorrichtung zum Stützen und/oder Führen eines Kunststoffprofils, dessen Schmelze in einem Extruder erzeugt wird, aus einem Werkzeug austritt und entlang einer theoretischen Extrusionsmittellinie einer Kalibrierstation und weiteren Nachfolgeeinrichtungen zugeführt wird, wobei in der Kalibrierstation und/oder einigen Nachfolgeeinrichtungen ein oder mehrere Unterstützungseinheiten angeordnet sind sowie ein diesbezügliches Verfahren.

Im Stand der Technik sind ähnliche Vorrichtungen bekannt, so offenbart zum Beispiel die EP 1 717 012 A2 eine Stützvorrichtung die auf einer Rolle eine Kurvenkulisse ausweist über die unterschiedliche Stützradien einstellbar sind.

Aus der EP 2 546 045 A1 ist ebenfalls eine Vorrichtung und ein Verfahren zur Unterstützung von Kunststoffprofilen in einer Extrusionslinie bekannt. Die Vorrichtung hat zumindest zwei Stützelemente, die jeweils eine Stützkontur aufweisen. Die Stützkonturen der Stützelemente sind verschieden voneinander ausgestaltet, um eine Unterstützung von Kunststoffprofilen mit unterschiedlichen Dimensionen und/oder Geometrien zu gewährleisten.

Aus der EP 1 967 350 A2 ist eine Führungsvorrichtung für extrudierte röhrenförmige Plastikfolien bekannt. **Aufgabe** der Erfindung ist es, eine Stützvorrichtung und ein Verfahren zum Stützen oder Führen von extrudierten Kunststoffrohren anzubieten die/das an unterschiedliche Rohrdurchmesser angepasst werden kann und dabei einfach baut.

Die **Lösung** der Aufgabe zur Vorrichtung ist im Anspruch 1, die Lösung der Aufgabe zum Verfahren ist im Anspruch 9 wiedergeben.

Durch die erfindungsgemäße Vorrichtung und das erfindungsgemäße Verfahren wird erreicht, dass bei der Stützvorrichtung jedes der Teile mindestens eine Anlagefläche aufweist, die am zu extrudierenden Profil anlegbar ist und die mindestens zwei Teile so angeordnet sind, dass die Anlagefläche der Teile an das zu extrudierende Profil anliegt. Es ist somit also sichergestellt ist, dass es umlaufend gestützt wird.

Die gesamte Verstellung zur Veränderung der Kontur, die durch diese Stützvorrichtung erzeugt wird, können während des Extrusionsprozesses der Kunststoffschmelze erfolgen.

Die Veränderungen der Kontur erfolgen durch Verdrehen von Gewindestangen. Dies kann einerseits manuell oder über einen zentralen Verstellmotor erfolgen. Alternativ können Zahnstangen oder auch ein Kniehebelmechanismus oder ähnliches zum Einsatz kommen. Hierbei ist auch denkbar, dass diese zentrale Verstellung mit der gesamten Maschinensteuerung in Verbindung steht und in Abhängigkeit von gemessenen Parametern die Verstellung automatisch vorgenommen wird.

Die Veränderung der Kontur wird dadurch erreicht, indem Elemente der Stützvorrichtung auf die theoretische Extrusionsmittellinie zu oder von ihr weg bewegt werden. In der Rohrextrusion wäre dies beispielsweise die Verkleinerung oder Vergrößerung eines Außendurchmessers des Profils. Es muss jedoch nicht zwingend eine radiale Bewegung der Elemente auf den Mittelpunkt sein, es ist genauso denkbar, die Konturveränderungen durch Verschieben der Elemente entlang einer Kurvenbahn oder durch Verdrehen von exzentrischen Elementen zu erreichen.

Die Stützvorrichtung ist aus einzelnen Elementen mit einer Stützkontur aufgebaut, wobei die Stützkontur auf den Mittelpunkt der Stützvorrichtung zu oder von ihr weg bewegbar ist. Wie bereits oben erwähnt, können also Elemente der Stützvorrichtung radial auf den Mittelpunkt der Stützvorrichtung zu bewegt werden oder von ihr weg.

In einer Variante werden somit die Elemente radial zum Mittelpunkt zu oder weg geschwenkt, was beispielsweise durch das Verdrehen von in den Elementen aufgenommenen Gewindestangen erreicht wird, wobei am Ende der Gewindestangen ein Radiuselement angeordnet ist, in dem die erforderliche Stützkontur abgebildet ist, welche am Profil anliegt.

Eine alternative Ausführung ist es, die Stützkontur über eine Kurvenbahn oder Drehachse zu verschwenken. Hierbei ist daran gedacht, dass Element mit dem Kurvenradius und der Stützkontur nicht radial auf den Mittelpunkt zu zubewegen, sondern anhand eines vorgegebenen Kurvenverlaufes zu verschwenken. Hiermit können unterschiedliche Steigungen und Winkel am Profil erreicht werden, wodurch auch asymmetrische Konturen abbildbar sind. Dies ist insbesondere dann sinnvoll, wenn die einzelnen Elemente nicht in einem Kreisring angeordnet sind, sondern versetzt zueinander. Es ist aber auch denkbar, auf einer beispielsweise senkrecht zur Extrusionslinie verlaufenden Drehachse exzentrische Scheiben anzuordnen oder mehrere Einzelscheiben, die durch Verdrehen dieser Drehachse ebenfalls die Stützkontur auf den Mittelpunkt der Stützvorrichtung zu schwenken und somit den gewünschten Stützbereich verändern.

Sind die einzelnen Stützelemente mehrfach nebeneinander angeordnet, ist es von Vorteil, zum Bewegen der Elemente ein Getriebe anzuordnen, welches beispielsweise auch zentral über die Maschinensteuerung angesteuert werden kann.

Die verschiedenen Stellungen bzw. Varianten werden in mehreren Figuren beispielhaft wiedergegeben, wobei gleiche Elemente mit gleichen Bezugsziffern benannt sind.

In den Zeichnungen wird schematisch eine erfindungsgemäße Vorrichtung gezeigt:
- Fig. 1: zeigt eine typische Extrusionslinie
- Fig. 2: Schnitt senkrecht zur Extrusionsachse und einem großen Rohr
- Fig. 3: Schnitt senkrecht zur Extrusionsachse und einem mittleren Rohr
- Fig. 4: Schnitt senkrecht zur Extrusionsachse und einem kleinen Rohr
- Fig. 5: Die Unterstützungseinheit eingefahren
- Fig. 6: Die Unterstützungseinheit ausgefahren
- Fig. 7: perspektivisch Darstellung von Unterstützungseinheiten an einem kleineren Rohr
- Fig. 8: wie Figur 2 mit 3 Unterstützungseinheiten
- Fig. 9: wie Figur 3 mit 3 Unterstützungseinheiten
- Fig. 10: 3D Darstellung eine Einbausituation bei einem kleinerem Rohr
- Fig. 11: 3D Darstellung eine Einbausituation bei einem größere Rohr
- Fig. 12: ein Möglichkeit eine zentralen Verstellung
- Fig. 13: eine Variante der Unterstützungseinheit
- Fig. 14: eine weitere Variante der Unterstützungseinheit

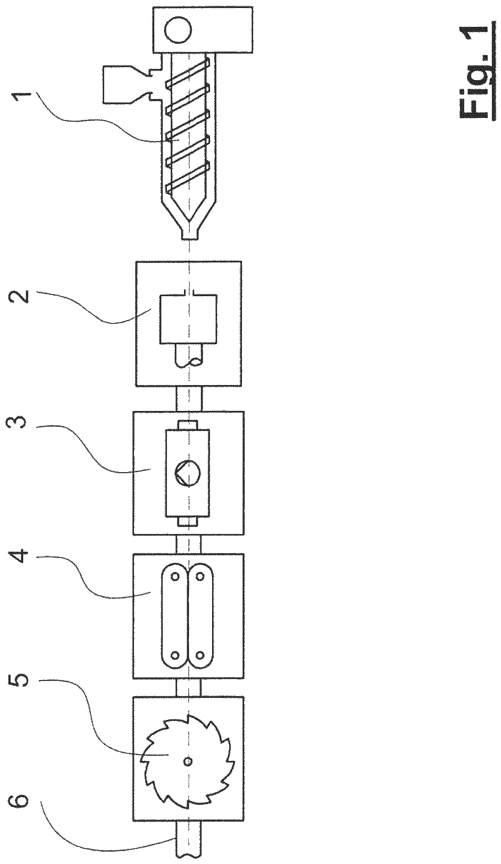

In der Figur 1 ist eine Extruderlinie mit einem herkömmlichen Extruder 1 und einem sich anschließenden Werkzeug 2, in der Regel in Form eines Rohrkopfes, vorteilhafterweise auch mit verstellbarem Massespalt, zur Herstellung eines Rohres 6 gezeigt. Daran schließt sich eine Kalibrierstation 3 an. An diese Kalibrierstation 3 können sich weitere Nachfolgeeinrichtungen wie weitere Sprühkalibrierstationen sowie ein Abzug 4, und Trennvorrichtung 5 etc. anschließen.

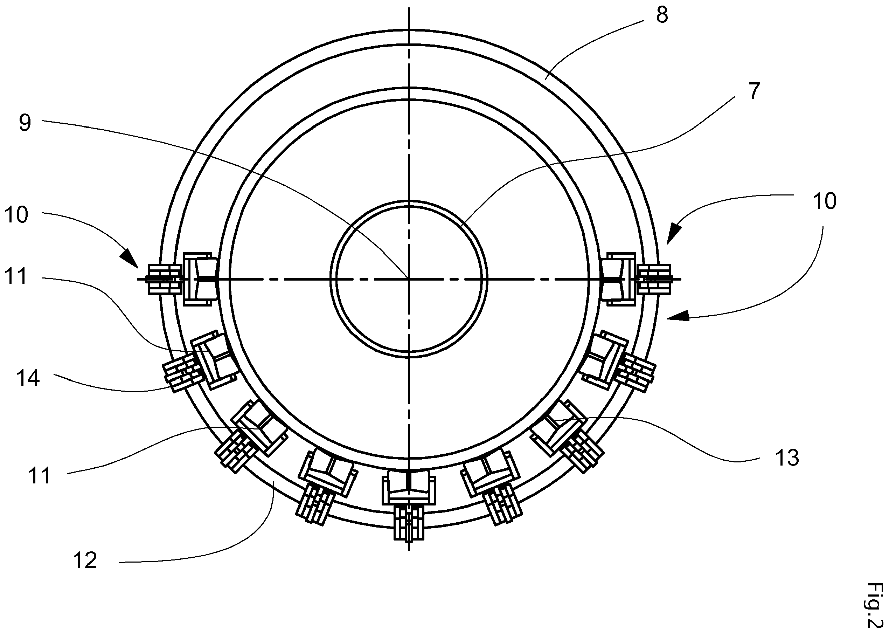

Die Figuren 2 bis 4 sind immer ein Schnitt senkrecht zur Extrusionsachse 9 durch die Kalibrierstation 3 oder einer Vakuumstation oder reinen Kühlstation, die sich an eine reine Kalibrierstation anschließt. Die beschriebenen Unterstützungseinheiten 10 können in beiden Nachfolgeeinrichtungen vorgesehen werden und sind flexibel für eine Vielzahl von Rohrdurchmesser einsetzbar. Die Figuren zeigen jeweils ein kleines Rohr 7 und ein großes Rohr 8. Die gesamte Unterstützungseinheit 10 kann auf unterschiedliche Durchmesser flexibel eingestellt werden. Dies kann zentral oder dezentral manuell oder automatisch erfolgen.

Grundprinzip der Verstellung ist eine Schere 14 die Unterstützungselemente 11 radial auf die theoretische Mittelachse/Extrusionsachse 9 zu oder davon wegbewegt. Je nach erforderlicher Unterstützung/Führung des Kunststoffrohres 6 werden mehr oder weniger Unterstützungselemente 11 in Eingriff gebracht.

Jedes der einzelnen Unterstützungselemente 11 kann über einen Verbindungsbügel 12 gekoppelt sein. Über diese Koppelung wird erreicht, dass alle in Eingriff zu bringenden Unterstützungseinheiten 11 synchron bewegt werden können.

In einer Station (Vakuumtank oder Kühltank, Kalibrierung) sind normalerweise mehrere Unterstützungseinheiten 10 angeordnet.

Es ist daher sinnvoll, die bei allen eingesetzten Unterstützungseinheiten 10, die Unterstützungselemente 11, auch weitgehend gleichzeitig zu bewegen.

Dies kann entweder durch ein Ansteuern und bewegen der Verbindungsbügel 12 jeder Unterstützungseinheit 10 geschehen oder die einzelnen Unterstützungselement 11 jeder Unterstützungseinheit 10 sind untereinander verbunden und werden somit gemeinsam bewegt.

Es ist auch möglich nur eine geringere Anzahl an Unterstützungselementen 11 in Eingriff zu bringen. So ist beispielsweise vorgesehen, nur jedes zweite am Umfang des Rohres angeordnetes Unterstützungselement 11 für kleine Rohre 7 einzusetzen. Dies kann einerseits über die Ansteuerung der einzeln gekoppelten Unterstützungselement 11 geschehen, es ist aber auch denkbar, dass die Unterstützungselement 11 eine Art Mitnehmer aufweisen und beim Verschieben des Verbindungsbügels 12 bestimmte Unterstützungselement 11 verschoben und bestimmte Unterstützungselement 11 nicht verschoben werden. Eine andere Möglichkeit ist es, die Unterstützungselement 11 über Gewindestangen zu verbinden, wobei die Gewindestangen nur auf der Strecke ein Gewinde aufweisen, über die das Unterstützungselement 11 auch verschoben werden soll. Ab einer vorbestimmten Position ist das Gewinde ausgespart und die Verschiebung des Unterstützungselementes 11 verbleibt.

Figur 2 zeigt eine Stellung der Unterstützungselemente 11 für ein großes Rohr 8, wobei alle Unterstützungselemente 11 im Eingriff sind.

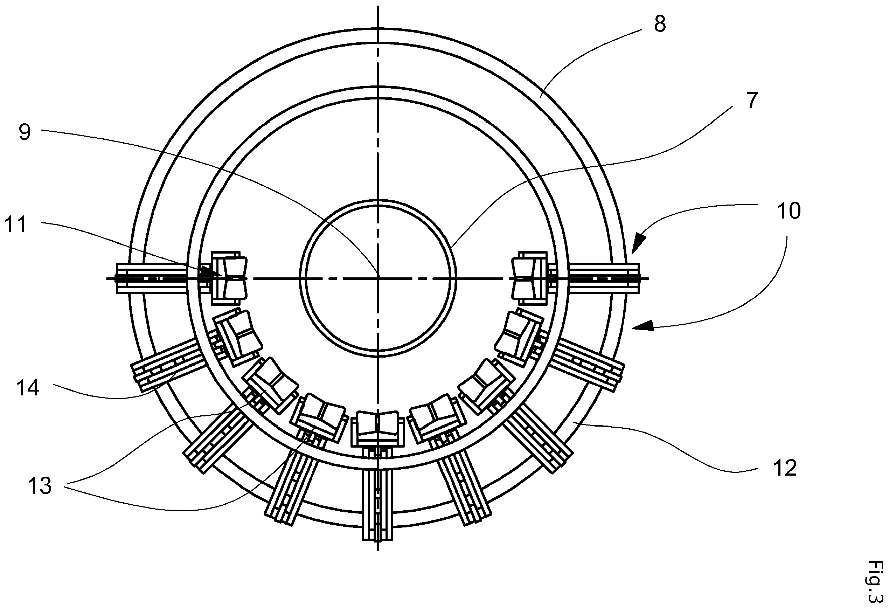

Bei Figur 3 ist die Stellung aller Unterstützungselemente 11 für ein mittleres, nicht dargestelltes Rohr gezeigt.

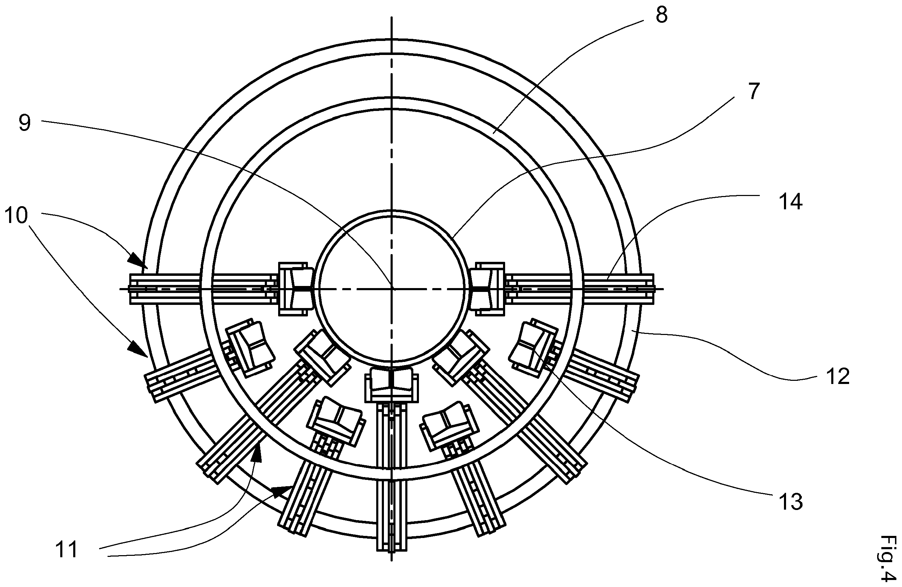

Bei Figur 4 ist nur jedes zweite Unterstützungselement 11 im Eingriff und stützt/führt ein kleines Rohr 7.

Die gewählte Bezeichnung klein, mittel, groß, für die Rohre, meint dabei die Größe der Rohrdurchmesser.

Jedes Unterstützungselement 11 ist gleich aufgebaut und besteht u.a. aus zwei Stütz- und Führungsrollen 13 die rotierbar auf einem Balken 19 angeordnet sind und können auf die Mittelachse, gleich Extrusionsachse 9 des Rohres, zu und davon wegbewegt werden. Diese Bewegung erfolgt über eine Schere 14. Jeweils zwei Stangen 16 sind an den Gelenken 15 und 17 angeordnet. Gelenk A (15) steht mit dem Balken 19 und Gelenk B (17) steht mit einem Träger 18 in Verbindung.

Werden die Stangen 16, die mit Gelenk B (17) verbunden sind, entlang der Erstreckungsrichtung des Träges 18 bewegt, bewegt sich der Balken 19 parallel vom Träger 18 weg oder auf diesen zu. Die Stangenpaare sind im gemeinsamen Gelenk C (20) zu einer Schere 14 verbunden. Das Stangenpaar das an Gelenk 15 angeordnet ist, weist an seinem anderen Ende ein Loslager in Form einer Rolle 21 auf, wodurch dieser Teil der Schere 14 auf der Unterseite des Balkens 19 gleitet.

Der Träger 18 kann fest mit der Wandung der jeweiligen Station verbunden sein, wenn dann eines der Stangenpaare 16 fest und das andere Stangenpaar lose am Träger 18 angeordnet ist, damit es z.B. mittels einer Gewindestange bewegt werden kann. Es ist aber auch denkbar den Träger 18 selbst als Gewindestange auszuführen und dann eins der Stangenpaar 16 mittels dieser zu bewegen. Somit wäre dann der Träger 18 als Verschiebeelement 21 ausgelegt.

Für die Funktion der Vorrichtung ist es nicht festgelegt welche Seite der Stangenpaar 16 als Fest- oder Loslager ausgebildet ist, Hauptsache die Schere 14 kann um das Gelenk C (20) auf oder zu gehen. Es ist somit auch denkbar, wie oben beschrieben, eine Seite der Stangepaare 16 mit dem Verschiebeelement 21 zu verbinden, das kann über ein Gewinde, ein Stift oder sonst einer Form des Mitnehmens ausgeführt sein und die andere Seite des Stangenpaares 16 mit Rollen zu versehen, damit dies Seite der Stangen sich auf dem Boden der Station (z.B. Innenseite des Kühltankes) abrollen kann. Es ist aber auch eine Form von Gleitlager denkbar.

Bestenfalls sind die Verschiebeelemente 21, zum Verstellen der Unterstützungselemente 11, außerhalb der Stationen angebracht. Dies hat den Vorteil, dass einerseits keine Abdichtung gegen das Sprühwasser in den Stationen für die Regel- und Steuereinheiten erforderlich sind und andererseits Wartungsarbeiten einfacher durchgeführt werden können.

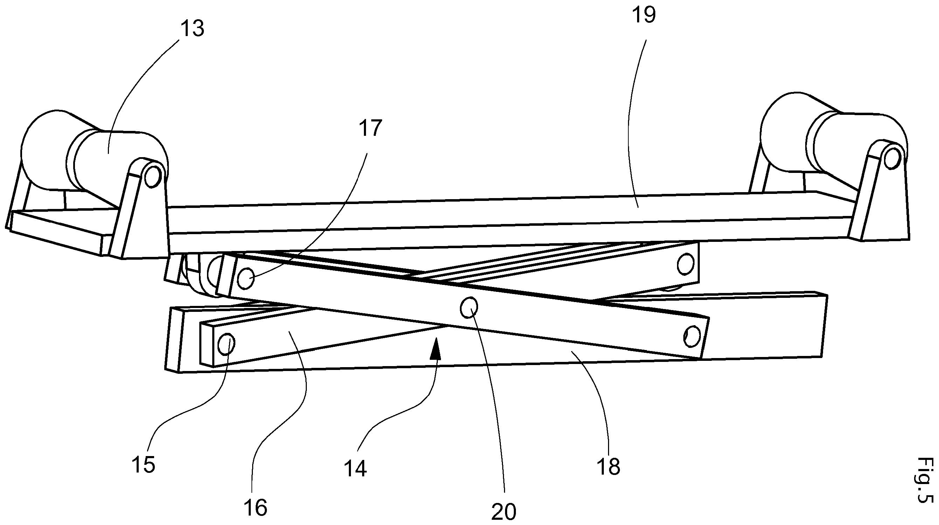

Figur 5 zeigt eine Unterstützungselement 11 mit zwei Stütz- und Führungsrollen 13 die an einem Balken 19 angeordnet sind. Der Balken 19 steht mit zwei Stangen 16 in Verbindung die über ein gemeinsames Gelenk C (20) zu einer Schere 14 verbunden sind. Eine der Stange 16 ist über das Gelenk 15 mit einem Träger 18 und die andere Stange 16 über das Gelenk 17 mit dem Balken 19 verbunden. Die Schere 14 ist in dieser Figur komplett eingefahren.

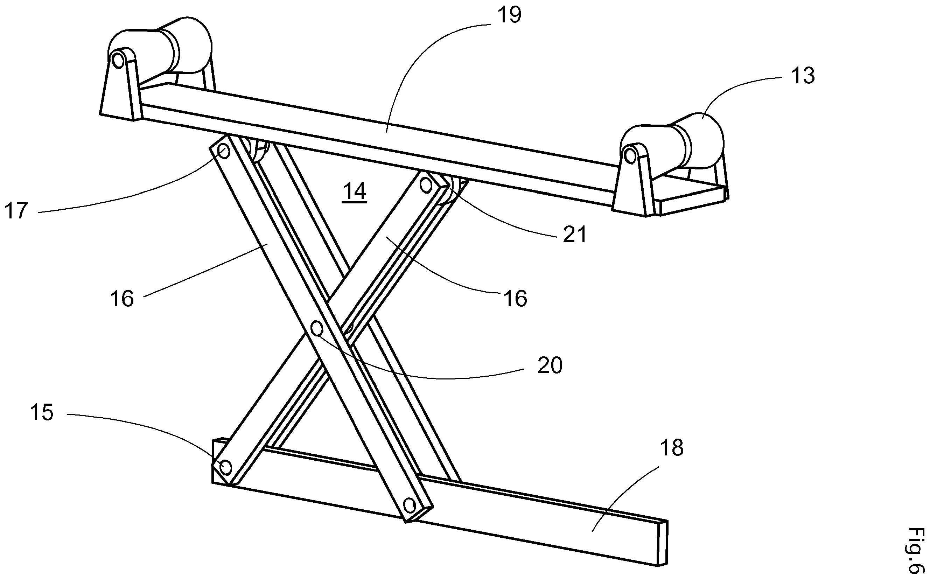

Figur 6 zeigt das Unterstützungselement der Figur 5 im ausgefahren Zustand, gleiche Teil sind wieder mit gleichen Bezugsziffern versehen.

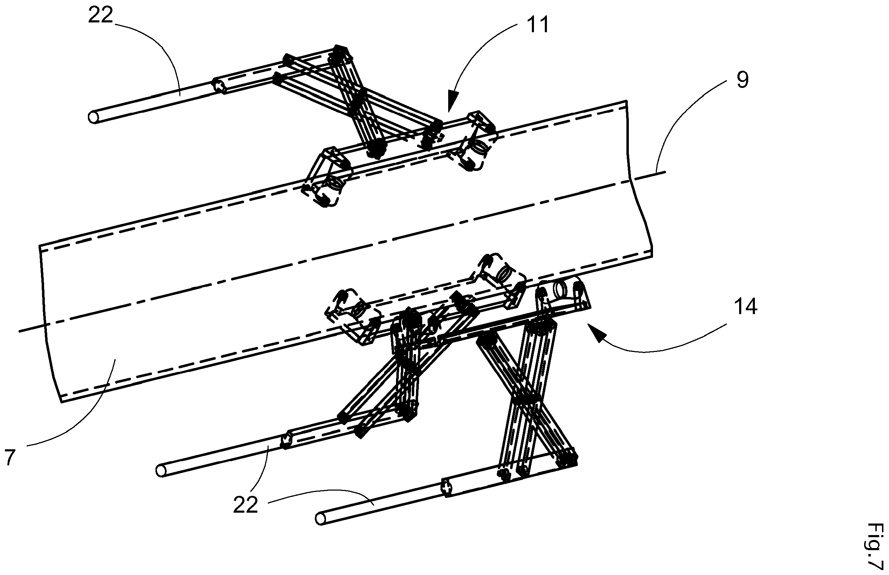

Figur 7 zeigt mehrere Unterstützungseinheiten auf den Umfang verteilt. Die Einheiten sind hier ganz eingefahren. Die Unterstützungselemente sind einzeln und gemeinsam verstellbar. Eine Verstellung erfolgt über Schiebestangen oder Spindeln, die an der Unterseite der Führungselemente angebracht sind. Die kann übereinen Antrieb per Hand oder mit Motor erfolgen.

An der unteren Verschiebestange sind auf der linken Seite über ein Gelenk zwei Stangen angebracht. Auf der rechten Seite sind zwei Stangen fest mit der Außengeometrie (Vakuumtank) verbunden (Fest-Los-Lagerung). In der Mitte sind alle vier Stangen durch ein weiteres Gelenk miteinander verbunden. Unterhalb der oberen Platte befindet sich auf der rechten Seite eine Rolle, die auf der Unterseite des Elements abrollen kann. Auf der rechten Seite sind die beiden Stangen mit einem Gelenk fest mit dem Oberteil verbunden. Somit entsteht auch hier eine Fest-Los-Lagerung. Wird nun das unten angeordnete Verschiebelement nach rechts bewegt, richtet sich die Konstruktion auf. Auf dem oberen Schlitten sind ein oder mehrere Gleitelemente angeordnet, die an das Rohr gedrückt werden und es somit führen.

Die Verstellung erfolgt über Stangen oder Spindeln, die durch den Vakuumtank nach außen geführt werden.

Länge und Breite der Schlitten sind variabel, somit auch der notwendige Verstellweg für die Zugstangen. Lagerung der Rollen oder Gleichelemente erfolgt durch den Schlitten und kann durch Gleitlager oder Rollenlager realisiert werden.

Die Verbindung des Hubelementes mit dem Tank kann direkt z.B. durch "anschweißen" erfolgen oder durch ein Zwischenelement, z.B. ein Lageblock oder Ähnliches.

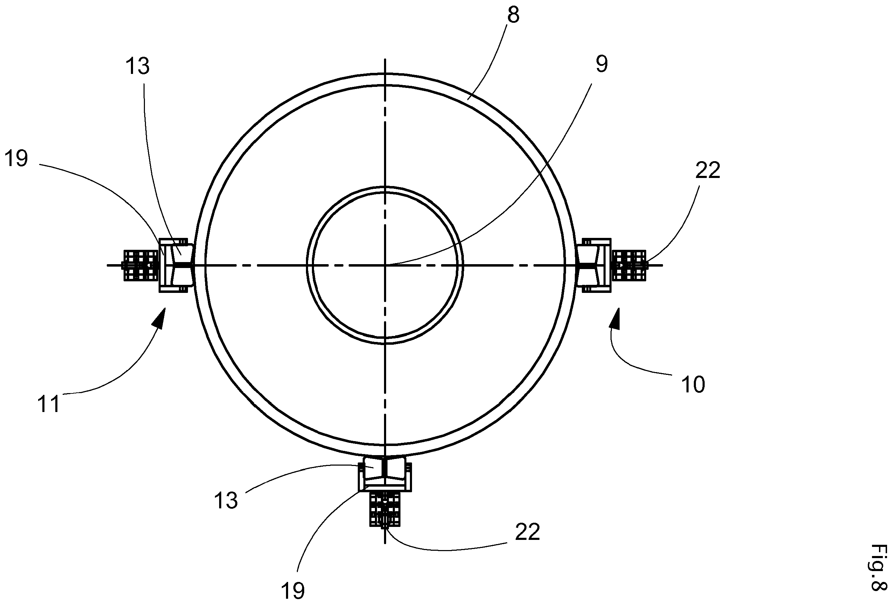

Figur 8 zeigt noch einmal eine Ausführung analog der Ausführung gemäß Figur 2, wobei hier lediglich drei Unterstützungselemente 11 gezeigt werden. Zusätzlich ist hier noch das Verschiebelement 22 dargestellt.

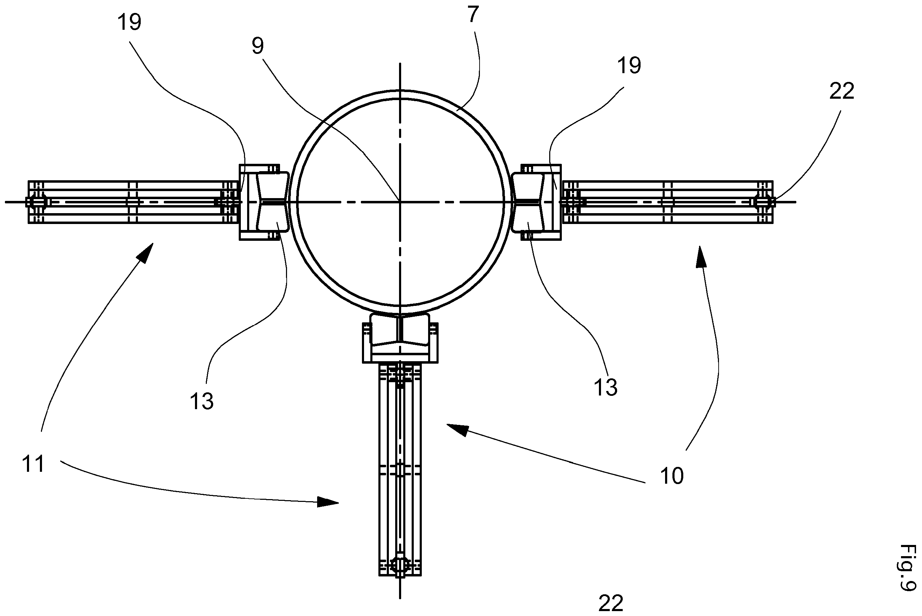

Die Figur 9 entspricht im Wesentlichen der Figur 8, wobei hier die Ausführung für ein kleines Rohr gezeigt ist und somit analog der Figur 4 zu sehen ist.

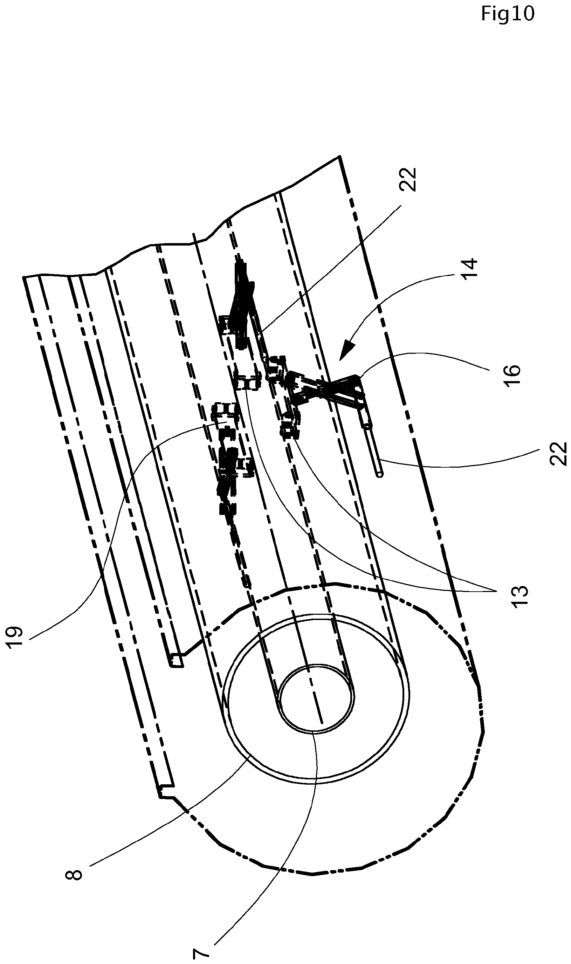

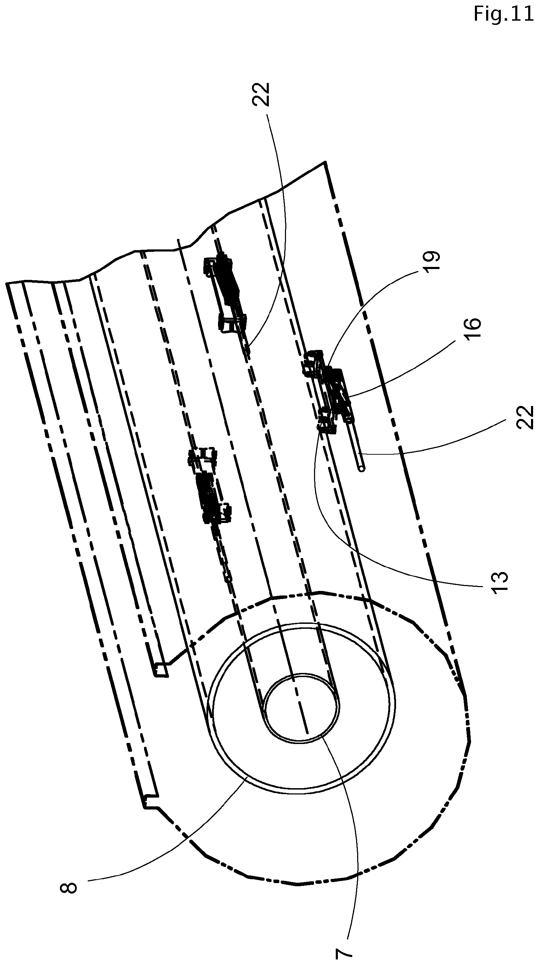

Die Figuren 10 und 11 zeigen die Erfindung in einer 3D Darstellung, wobei in Figur 10 die Darstellung für ein kleines Rohr 7 und in Figur 11 die Darstellung für ein großes Rohr 8 im Vordergrund steht.

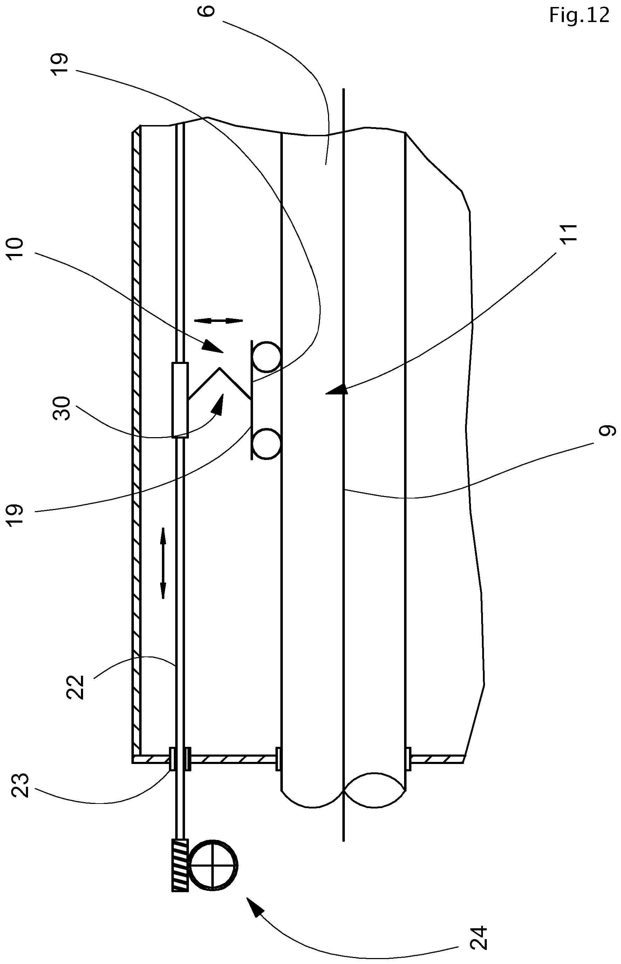

Figur 12 zeigt schematisch in einem Halbschnitt eine Möglichkeit der zentralen Ansteuerung der Unterstützungseinheit 10. Die Unterstützungseinheit 10 liegt mit dem Unterstützungselement 11 an der Außenwandung des Rohres 6 an. Es kann hierbei jede hier beschriebene Ausführung von Unterstützungseinheit 11 (Stütz- und Führungsrolle 13, Wasserfilm 27, Band 26 oder ähnliches) verwendet werden. Die Unterstützungseinheit 10 wird über die Mimik 30 auf die Extrusionsachse 9 zu oder von dieser weg bewegt. Die Unterstützungseinheit 10 steht dabei mit einem Verschiebeelement 22 in Verbindung. Das Verschiebeelement 22 kann z.B. aus Kunststoff oder Aluminium sein, vorteilhaft ist eine Materialwahl die korrosionsbeständig ist und weitgehend ohne Schmierstoffe auskommt. Besonders vorteilhaft ist bei dieser Ausführung, dass alle Antriebselemente 24 außerhalb des Tanks (egal ob Vakuumtank, Kühltank, Kalibrierstation oder einer Kombination daraus) angeordnet sind. Als Antrieb kann eine an dem Verschiebeelement 22 angebrachter Gewindestutzen mit Zahnrad oder dergleichen dienen. Es ist aber auch jede andere Form eines Antriebes denkbar über den eine axiale Verschiebung des Verschiebeelements 22 realisiert wird. Die Abdichtung des an seiner Oberfläche glatten Verschiebeelementes 22 zwischen dem Inneren und dem Äußeren des Tanks erfolgt über eine Dichtung 23. Die beiden Doppelpfeile symbolisieren die axiale Bewegung des Verschiebeelementes 22 bzw. die parallele Verschiebung des Balkens 19 mit dem Unterstützungselement 11.

Selbstverständlich können weiter Einheiten gleichzeitig zentral verstellt werden, auch wenn hier nur eine Unterstützungseinheit 10 auf nur einer Seite des Rohres 6 dargestellt ist.

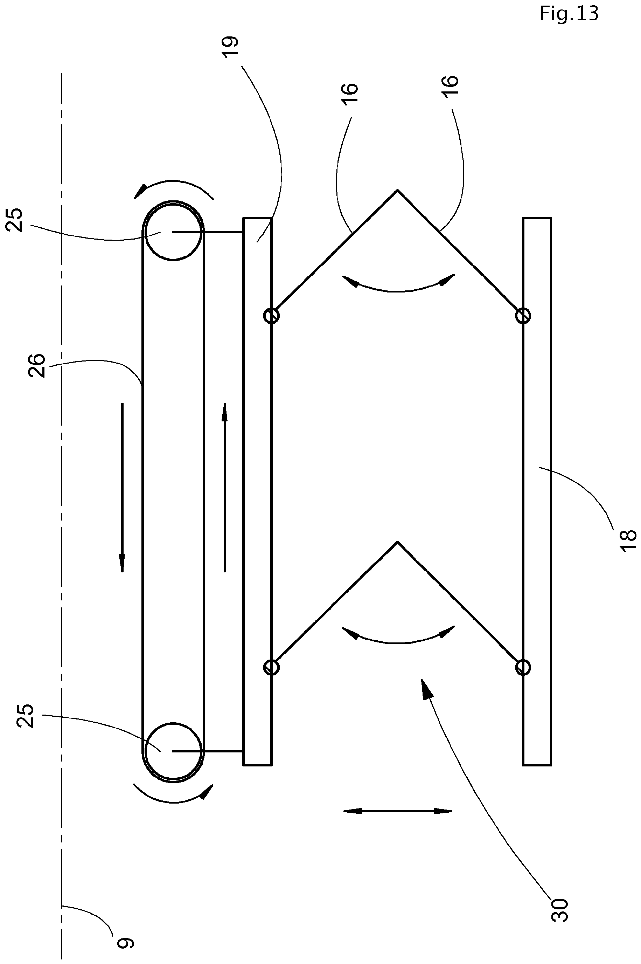

In Figur 13 wird schematisch eine weitere Ausführungsform der Unterstützungseinheit 10 wiedergegeben. Am Träger 18 sind Stangen 16 angeordnet die über ein Gelenk mit dem Balken 19 in Verbindung stehen. Durch eine Winkelveränderung der über ein Gelenk verbunden Stangenpaar wird der Balken 19 auf die Extrusionsachse 9 zu oder von dieser weg bewegt, was durch den Doppelpfeil symbolisiert wird. Am Balken 19 ist in dieser Ausführungsform ein Walzenpaar 25 angeordnet über das ein Band 26 gespannt ist. Das Band 26 kann sich über die Walzen in Extrusionsrichtung mit bewegen und stütz bzw. führt das Rohr 6 auf diese Weise. Je nach Ausgestaltung des Bandes 26 kann die Berührungsfläche mit dem Rohr 6 größer oder kleiner gestaltet werden. Wird z.B. in der Bandmitte eine Erhebung vorgesehen entsteht aus der Flächenberührung eine Linienberührung.

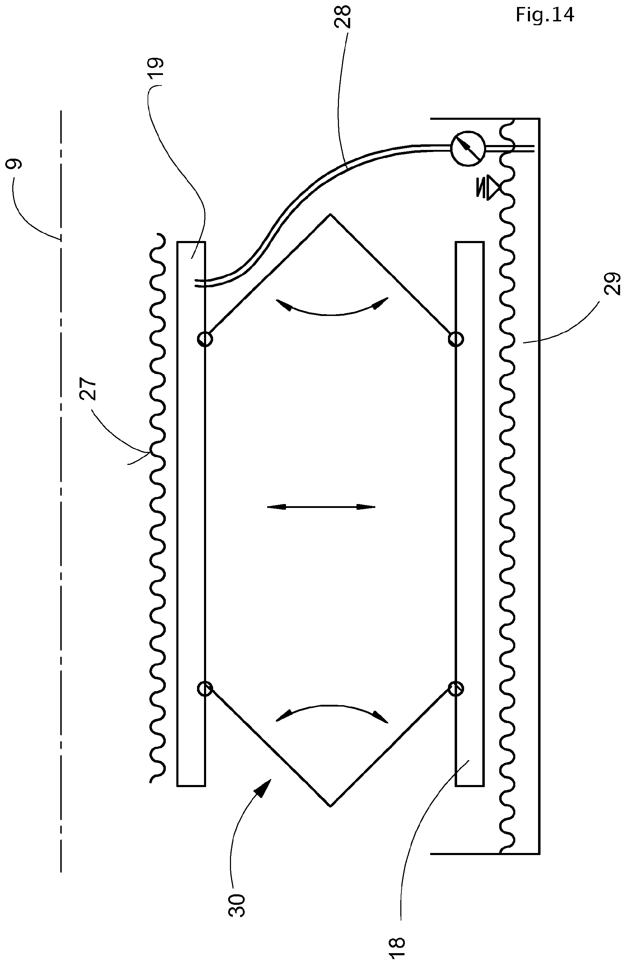

Figur 14 zeigt eine weitere Alternative. Auch hier sind wieder wie in Figur 13 gezeigt, am Träger 18 Stangen 16 angeordnet die gelenkig mit dem Balken 19 verbunden sind. Hier wurde jedoch eines der Stangenpaare um 180° verdreht angeordnet, um darzustellen, dass auch mit unterschiedlicher Mimik 30 eine Verschiebung der Unterstützungseinheit 10 auf die Extrusionsachse zu oder von dieser weg realisiert werden kann. Durch Winkeländerung der Stangenpaare wird also wiederum der Balken 19 bewegt. Auf dem Balken 19 herrscht ein Wasserfilm 27 auf dem das nicht dargestellte Rohr 6 schwimmt bzw. gleitet. Die Wasserversorgung zur Aufrechterhaltung des Wasserfilmes 27 wird hier beispielhaft über eine Verbindung 28 zum Kühlwasser 39 am Boden des Tanks sichergestellt, wo eine Pumpe stetig oder bei Bedarf Wasser auf den Baken fördert.

In allen dargestellten Varianten, kann auch der Träger 18 durch die Wandung des Tanks ersetz werden oder der Träger an dieser angeordnet sein. Es muss also nicht zwingend der Träger verschoben werden, es kann z.B. auch das Verschiebelement 22 direkt an der Mimik 30 angreifen. Weiterhin ist bei allen Ausführungsformen möglich die Unterstützungseinheiten 10 so an das Rohr anzulegen, dass nicht alle den gleichen Abstand zum Extrusionsachse 9 aufweisen, sondern dieser bewusst unterschiedlich ist. Dadurch kann auch ein individuell ausgeführtes Rohr, z.B. ein ovales Rohr, gestützt und geführt werden.

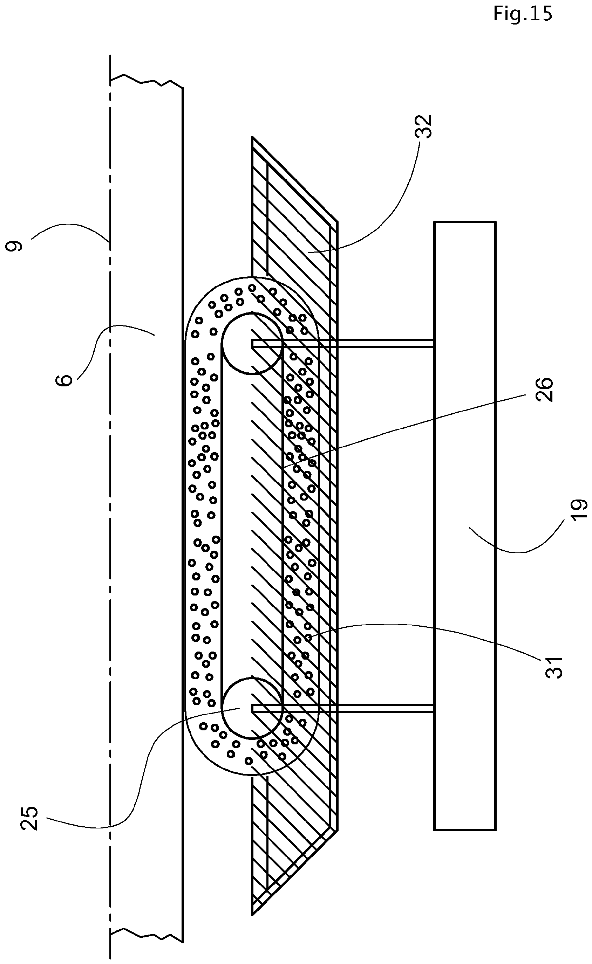

In Figur 15 wird quasi eine Kombination der Varianten gemäß Figur 13 und 14 dargestellt. Auf dem Band 26 ist eine Art Schwamm 31 angebracht, wobei hier auch ein anderes weiches saugfähiges Material zum Einsatz gelangen kann. Dieser Schwamm 31 ist in der Lage das Rohr 6 ohne Abdrücke zu hinterlassen zu stützen und/oder zu führen. Weiterhin ist er in der Lage Wasser aufzunehmen und dadurch die Flexibilität in sich und die Gleitfähigkeit an der Rohraußenfläche zu verstärken. Da das Band mit dem Schwamm über die Walzen 25 im Umlauf gehalten wird, kann er sich auf der vom Rohr abgewandten Seite mit Wasser vollsaugen in dem es durch ein Wasserbad 32 geführt wird. Durch die Anbringung am Balken 19, kann auch diese Ausführung parallel zur Extrusionsachse 9, über die hier nicht dargestellte Mimik, verschoben werden.

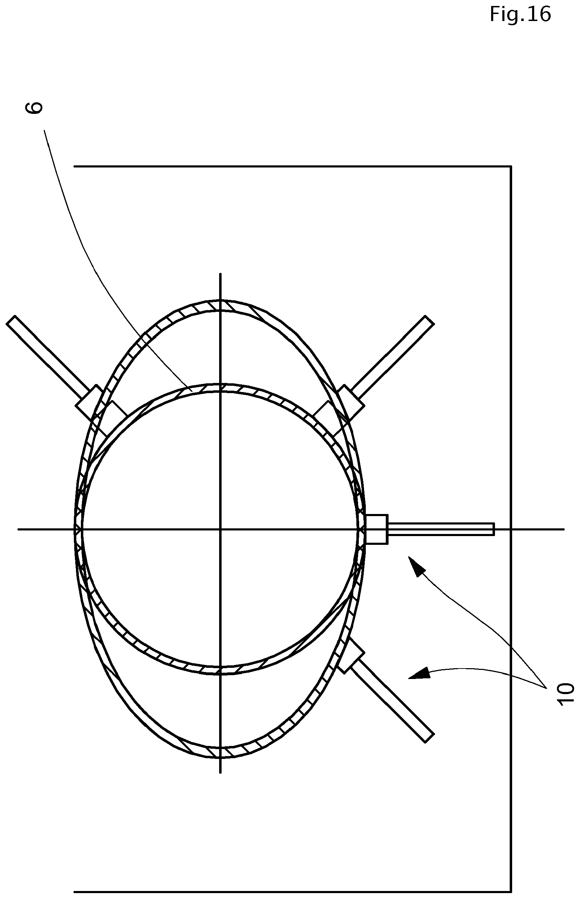

In Figur 16 wird noch einmal, das weiter oben Beschriebene, zur möglichen Beeinflussung der Rundheit des Rohres gezeigt. Je nachdem wie stark die Unterstützungseinheit 10 Richtung Extrusionsachse verschoben kann wirs ein Kreisrundes oder eben ein ovales Rohr gestützt werden. Durch diese unterschiedliche Einstellung, kann, je nach Produktionsgegebenheiten, auch ein gewünschtes kreisrundes Rohr bewusst leicht oval gestützt werden, da es innerhalb der Extrusiosstrecke dann durch gegebene Umstände Kreisrund wird. Über geeignete Verfahren kann am Ende der Linie die Rundheit gemessen und bei Abweichungen eine entsprechende Verstellung über die Steuerung und einem Mess- und Regelkreis veranlasst werden. Es kann somit während der Produktion Einfluss auch die Qualität des Rohres genommen werden.

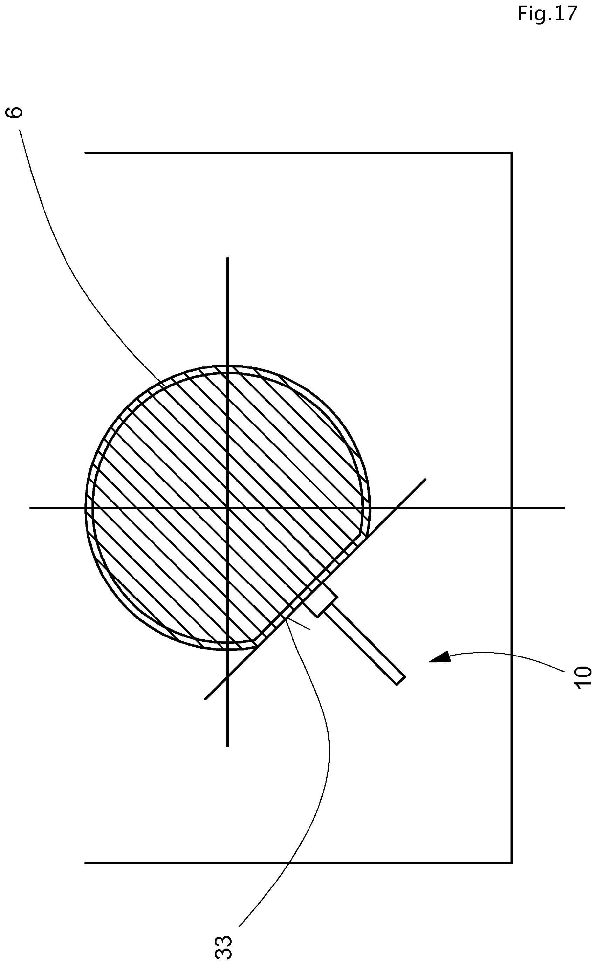

Mittels der erfindungsgemäßen Vorrichtung und dem Verfahren können auch die sogenannten Flachstellen vermieden werden, da alle Teile die am Rohr anliegen, weich und elastisch sind. Unter Flachstelle 33 wird allgemein ein durch die Stützelemente am Rohr Flach gedrückte Stelle verstanden, die dann im Schnitt als gerade Linie ähnlich einer Tangente zu erkennen ist, wie es in der Figur 17 gezeigt ist.

**Bezugszeichenliste:**

| | | | |
|---|---|---|---|
| 1 | Extruder | 18 | Träger |
| 2 | Werkzeug | 19 | Balken |
| 3 | Kalibrierstation | 20 | Gelenk C |
| 4 | Abzug | 21 | Rolle |
| 5 | Trennvorrichtung | 22 | Verschiebeelement |
| 6 | Rohr | 23 | Dichtung |
| 7 | kleines Rohr | 24 | Antrieb |
| 8 | großes Rohr | 25 | Walze |
| 9 | Extrusionsachse | 26 | Band |
| 10 | Unterstützungseinheit | 27 | Wasserfilm |
| 11 | Unterstützungselement von 10 | 28 | Verbindung |
| 12 | Verbindungsbügel für 11 | 29 | Kühlwasser |
| 13 | Stütz- und Führungsrolle | 30 | Mimik |
| 14 | Schere | 31 | Schwamm |
| 15 | Gelenk A | 32 | Wasserbad |
| 16 | Stange | 33 | Flachstelle |
| 17 | Gelenk B | | |

## Patentansprüche

1. **Extrusionslinie mit einer** Vorrichtung zum Stützen und/oder Führen eines Kunststoffprofils (6) innerhalb einer Extrusionslinie, in einer Kalibrierstation (3) und/oder einer weiteren Nachfolgeeinrichtungen, wobei als weitere Nachfolgeeinrichtungen innerhalb der Extrusionslinie ausschließlich weitere Sprühkalibrierstationen, ein Abzug (4) und eine Trennvorrichtung (5) verstanden werden,
wobei in der Kalibrierstation (3) und/oder in mindestens einer der Nachfolgeeinrichtungen mindestens eine Unterstützungseinheit (10) angeordnet ist,
wobei die Unterstützungseinheit (10) mindestens ein Unterstützungselement (11) umfasst,
wobei das Unterstützungselement (11) an einem Balken (19) angeordnet ist und
parallel auf die theoretischen Mittelachse, der Extrusionsachse (9) zu oder von dieser wegbewegbar ist,
**dadurch gekennzeichnet, dass**
der Balken (19) mit einer Schere (14) in Verbindung steht,
wobei die Schere (14) aus zwei Stangen (16) gebildet wird,
wobei eine Stange (16) der Schere (14) über ein Gelenk B (17) als feste Verbindung und eine Stange (16) der Schere (14) über eine Rolle (21) als lose Verbindung angeordnet ist.

2. Vorrichtung nach Anspruch 1, **dadurch gekennzeichnet, dass** das Unterstützungselement (11) aus mindestens einer Stütz- und Führungsrollen (13) besteht.

3. Vorrichtung nach mindestens einem der vorigen Ansprüche, **dadurch gekennzeichnet, dass** an einer Unterstützungseinheit (10) mehrerer Unterstützungselemente (11) angeordnet sind.

4. Vorrichtung nach mindestens einem der vorigen Ansprüche, **dadurch gekennzeichnet, dass** die Unterstützungselemente (11) über einen Verbindungsbügel (12) gekoppelt sind.

5. Vorrichtung nach mindestens einem der vorigen Ansprüche, **dadurch gekennzeichnet, dass** mehrere Unterstützungseinheiten (10) in einer Station angeordnet sind.

6. Vorrichtung nach Anspruch 1, **dadurch gekennzeichnet, dass** das Unterstützungselement (11) aus zwei Walzen (25) besteht an denen ein Band (26) anliegt.

7. Vorrichtung nach Anspruch 1, **dadurch gekennzeichnet, dass** das Unterstützungselement (11) aus einem Wasserfilm (27) besteht.

8. Vorrichtung nach Anspruch 2, **dadurch gekennzeichnet, dass** die Stütz- und Fügerollen (13) neben einander, hintereinander oder versetzt zueinander auf dem Balken angeordnet sind.

9. Verfahren zum Stützen und/oder Führen eines Kunststoffprofils (6), innerhalb einer Extrusionslinie, in einer Kalibrierstation (3) und/oder einer weiteren Nachfolgeeinrichtungen,
wobei als weitere Nachfolgeeinrichtungen innerhalb der Extrusionslinie ausschließlich weitere Sprühkalibrierstationen, ein Abzug (4) und eine Trennvorrichtung (5) verstanden werden,
wobei in der Kalibrierstation (3) und/oder in mindestens einer der Nachfolgeeinrichtungen mindestens eine Unterstützungseinheit (10) angeordnet ist,
wobei die Unterstützungseinheit (10) mindestens ein Unterstützungselement (11) umfasst, das an einem Balken (19) angeordnet ist und mindestens der Balken (19) parallel auf die theoretische Mittelachse, der Extrusionsachse (9) zu oder von dieser weg bewegt wird,
**dadurch gekennzeichnet, dass**
zwei Stangen (16) um ein Gelenk C (20) drehen, wodurch eine Schere (14) auf oder zugeht.
wobei die Stangen (16) über einen Träger (18) entlang der Erstreckungsrichtung des Trägers (18) bewegt werden,
wobei der an den Stangen (16) angeordnete Balken (19) parallel vom Träger (18) weg oder auf diesen zu bewegt wird.

10. Verfahren nach einem der Ansprüche 9, **dadurch gekennzeichnet, dass** mehrere Unterstützungseinheiten (10) über einen Verbindungsbügel (12) bewegt werden.

11. Verfahren nach Anspruch 10, **dadurch gekennzeichnet, dass** über ein Verschiebeelement (22) die Unterstützungseinheit (10) zentral verstellt wird, wobei die Antriebselemente (24) zum axialen Verschieben außerhalb der Station angeordnet sind und manuell oder über eine Steuerung angetrieben werden.

12. Verfahren nach einem der Ansprüche 9 bis 11, **dadurch gekennzeichnet, dass** der Grand der Verstellung wie weit der Balken (19)parallele auf die Extrusionsachse (9) bewegt wird in Abhängigkeit der gewünschten Rundheit des Rohres erfolgt.

## Claims

1. **Extrusion line comprising an** apparatus for supporting and/or guiding a plastic profile (6) within an extrusion line, in a calibration station (3) and/or further downstream devices,
further downstream devices being exclusively understood as further spray calibration station, an extraction device (4), and a cutting device (5),
at least one support unit (10) being installed in the calibration station (3) and/or at least one of the downstream devices,
the support unit (10) comprising at least one supporting element (11),
the supporting element (11) being arranged on a beam (19) and
parallelly movable towards, or away from, the imaginary center axis, the extrusion axis (9),
**characterized in that**
the beam (19) is connected to a shear element (14),
the arrangement (14) being composed of two bars (16),
one bar (16) being of the shear element (14) being arranged by means of a joint B (17) in a fixed connection, the other bar (16) of the shear element (14) having a lose connection via a roller (21).

2. Apparatus according to claim 1, **characterized in that** the support element (11) consists of at least one support and guide roller (13).

3. Apparatus according to one at least of the above claims, **characterized in that** the support unit (10) comprises several support elements (11).

4. Apparatus according to one at least of the above claims, **characterized in that** the support elements (11) are linked by a crossbar (12).

5. Apparatus according to one at least of the above claims, **characterized in that** several support units (10) are arranged in one station.

6. Apparatus according to claim 1, **characterized in that** the support element (11) consists of two rollers (25) that guide a belt (26).

7. Apparatus according to claim 1, **characterized in that** the support element (11) is a water film (27).

8. Apparatus according to claim 2, **characterized in that** the support and guide rollers (13) are arranged on the beam (19) in juxtaposition, in a row, or offset to one another.

9. Process for supporting and/or guiding a plastic profile (6) within an extrusion line, in a calibration station (3) and/or further downstream devices,
further downstream devices being exclusively understood as further spray calibration stations, an extraction device (4), and a cutting device (5),
at least one support unit (10) being installed in the calibration station (3) and/or at least one of the downstream devices,
the support unit (10) comprising at least one support element (11),
the support element (11) being arranged on a beam (19) and
movable towards, or away from, the imaginary center axis, the extrusion axis (9), **characterized in that**
two bars (16) rotate around a joint C (20), thus opening and closing the shear element (14),
the bars (16) being shifted by means of a bracket (18) in the direction of movement of the bracket (18),
the beam (19) linked to the bars (16) being parallelly moved towards, or away from, the bracket (18).

10. Process according to claim 9, **characterized in that** several support elements (11) are moved by means of a crossbar (12).

11. Process according to claim 10, **characterized in that** the support unit (10) is centrally controlled via a shifting element (22), the drive elements (24) being installed outside the station to ensure the axial shifting and being driven manually or by means of a control system.

12. Process according to one of the claims 9 to 11, **characterized in that** the degree of adjustment, that is, the distance along which the beam (19) is moved parallelly to the extrusion axis (9) depends on the desired degree of roundness of the pipe.

## Revendications

1. Ligne d'extrusion comprenant un dispositif pour soutenir et/ou pour guider un profile en plastique (6) dans une ligne d'extrusion, une station de calibrage (3) et/ou d'autres installations subséquentes,
d'autres installations subséquentes dans la ligne d'extrusion étant comprises exclusivement comme d'autres stations de calibrage par vaporisation, un dispositif extracteur (4) ainsi qu'un dispositif de séparation (5),
au moins un dispositif de soutien (10) étant agencé dans la station de calibrage (3) et/ou dans au moins une des installations subséquentes,
le dispositif de soutien (10) comprenant au moins un élément de soutien (11),
l'élément de soutien (11) étant disposé sur un barreau et
pouvant être déplacé vers ou écarté de l'axe centrale théorique, l'axe d'extrusion (9), **caractérisée en ce que**
le barreau (19) est en contact avec un dispositif en ciseaux (14),
ledit dispositif en ciseaux (14) étant constitué de deux tiges (16),
une tige (16) du dispositif en ciseaux (14) étant agencée comme connexion solide via une articulation B (17) et une tige dudit dispositif en ciseaux (14) étant agencée comme connexion amovible par l'intermédiaire d'un galet (21).

2. Dispositif selon la revendication 1, **caractérisé en ce que** l'élément de soutien (11) consiste d'au moins un galet de soutien et de guidage (13).

3. Dispositif selon au moins une des revendications précédentes, **caractérisé en ce que** plusieurs éléments de soutien (11) sont agencés dans une unité de soutien (10).

4. Dispositif selon au moins une des revendications précédentes, **caractérisé en ce que** les éléments de soutien (11) sont couplés via une barre de liaison (12).

5. Dispositif selon au moins une des revendications précédentes, **caractérisé en ce que** plusieurs unités de soutien (10) sont agencées dans une station.

6. Dispositif selon la revendication 1, **caractérisé en ce qu'**un élément de soutien comprend deux galets (25) contre lesquels une bande (26) est placée.

7. Dispositif selon la revendication 1, **caractérisé en ce que** l'élément de soutien (11) est un film aqueux (27).

8. Dispositif selon la revendication 2, **caractérisé en ce que** les galets de soutien et de guidage (13) sont agencés sur le barreau l'un à côté de l'autre, l'un derrière l'autre ou décalés l'un par rapport à l'autre.

9. Procédé de soutien et/ou de guidage d'un profile en plastique (6) dans une ligne d'extrusion, une station de calibrage (3) et/ou d'autres installations subséquentes, d'autres installations subséquentes dans la ligne d'extrusion étant comprises exclusivement comme d'autres stations de calibrage par vaporisation, un dispositif extracteur (4) ainsi qu'un dispositif de séparation (5),
au moins un dispositif de soutien (10) étant agencé dans la station de calibrage (3) et/ou dans au moins une des installations subséquentes,
le dispositif de soutien (10) comprenant au moins un élément de soutien (11),
l'élément de soutien (11) étant disposé sur un barreau et
au moins le barreau (19) pouvant être déplacé parallèlement vers ou écarté de l'axe centrale théorique, l'axe d'extrusion (9),
**caractérisé en ce que**
deux tiges (16) tournent autour d'une articulation C (20) afin d'ouvrir ou de fermer un dispositif en ciseaux (14),
lesdites tiges (16) étant déplacées par l'intermédiaire d'un support (18) le long de la direction d'extension du support (18),
le barreau (19) agencé sur les tiges (16) étant déplacé parallèlement vers ou écarté du support (18).

10. Procédé selon la revendication 9, **caractérisé en ce que** plusieurs unités de soutien (10) sont déplacées via une barre de liaison (12).

11. Procédé selon la revendication 10, **caractérisé en ce que** l'unité de soutien (10) est ajustée de façon centralisée via un élément de décalage (22), les éléments de commande (24) pour le déplacement axial étant arrangés à l'extérieur de la station et pouvant être commandés de manière manuelle ou via une commande.

12. Procédé selon l'une quelconque des revendications 9 à 11, **caractérisé en ce que** le dégrée du déplacement parallèle du barreau (19) par rapport à l'axe d'extrusion (9) est défini en fonction de la rondeur souhaitée du tube.
